# EUROPEAN PATENT APPLICATION

(11) **EP 4 461 607 A2**
(43) Date of publication of application: **13.11.2024**
(21) Application number: 24180735.3
(22) Date of filing: 26.12.2022
(51) Int. Cl.: B60R 21/36

(54) **AIRBAG**

(30) Priority: 27.12.2021 JP 2021213078; 27.12.2021 JP 2021213198
(62) Divisional of application: 22916021.3
(71) Applicant: Asahi Kasei Kabushiki Kaisha, Tokyo 1000006 (JP)
(72) Inventor: Kabeya, Takumi, Tokyo, 100-0006 (JP); Ise, Fumiaki, Tokyo, 100-0006 (JP)
(74) Representative: dompatent von Kreisler Selting Werner - Partnerschaft von Patent- und Rechtsanwälten mbB

(57) **Abstract**

Provided is an airbag formed by sewing opposing base fabric panels to each other with a broad tethering fabric for maintaining a predetermined thickness, wherein tearing of the sewn areas is reduced. This airbag is characterized: in that stitching between the base fabric panels and the tethering fabric includes a plurality of discrete rectilinear stitches along a virtual line extending in the width direction of the tethering fabric, and the ends of the rectilinear stitches have bends that bend by a prescribed angle and to a predetermined length from the virtual line toward a seam-allowance edge of the tethering fabric; or in that stitching between the base fabric panels and the tethering fabric includes a plurality of individual curved stitches that form protrusions on the opposite side from the seam-allowance edge of the tethering fabric, and the vertices of the plurality of individual curved stitches are on a virtual line extending in the width direction of the tethering fabric.

## Description

### FIELD

The present invention relates to an airbag to be used in a vehicle-mounted airbag device. More specifically, the invention relates to an airbag having reduced tearing at the seams, the airbag being made by sewing a wide tether cloth between opposing base fabric panels so that a predetermined thickness is maintained when it is inflated.

The present invention relates to an airbag to be used in a vehicle-mounted airbag device. More specifically, the invention relates to an airbag having reduced tearing at the seams, the airbag being made by sewing a wide tether cloth between opposing base fabric panels so that a predetermined thickness is maintained when it is inflated.

### BACKGROUND

Conventional airbags in vehicle-mounted airbag devices have been constructed so that a tether connecting together opposing panels determines the distance between the opposing panels, for when the thickness after full inflation is to be defined. PTL 1 describes a pedestrian airbag, wherein the tether between opposing panels is a wide tether reaching a length of about 1/2 to 1/3 of the vehicle width. The tether supports the deployed inflated structure of the airbag which covers the wide hood cover (bonnet) of the vehicle.

However, PTL 1 does not specifically describe the manner of the seam between the panel and tether (composed of the joint of the split body), nor does it describe the strength of the seam.

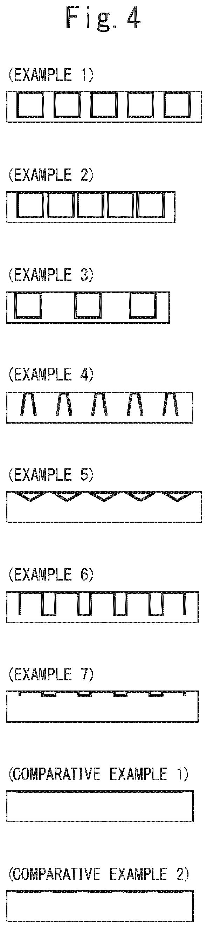

PTL 2 discloses providing a bag structure for an airbag device that has a low inertial mass for the bag and can reduce the number of parts and lower production cost, the airbag device having a bag 21 formed by sewing a seam between a gas inlet side half 21a in which a gas inlet is formed, and a butting side half 21b, with placement of a cloth string 23 (corresponding to a tether), one end of which is attached to the gas inlet side half 21a inside the bag 21 and the other end of which is sewn inside the butting side half 21b, the shape of the bag 21 being restricted by the string 23 during inflated deployment, wherein the string 23 is placed so that the direction in which the weft or warp extends is diagonal to the lengthwise direction of the string 23 (bias placement), while the other end of the string 23 is sewn to the inner surface of the butting side half 21b, setting non-sewn parts δ of prescribed widths on both sides in the widthwise direction. PTL 2 states that sewing to a test piece at a section beyond the full width of the tether, or sewing at a section approximately equal to the full width of the tether, has tended to result in greater tendency for tearing, compared to sewing with non-sewn parts of prescribed width set on both sides of the tether (see relevant Table 1). PTL 2 also states that if the sewn section is essentially rectangular with C-chamfering on both edge corners (angle α) to gradually increase the area in the lengthwise direction, and sewing is in an approximately ellipsoid manner while gently varying the area at both ends in the lengthwise direction, then it is possible to prevent inconveniences such as peeling, without concentration of stress at the seams, even when impactful force is exerted on the tether during inflated deployment of the bag (see the relevant Fig. 4b, Fig. 5 and Fig. 6). This is a driving seat airbag having a defined deployed inflated structure with a thin-string tether.

However, the tether described in PTL 2 has relatively narrow overall width, with the panel and tether being connected by a single continuous seam.

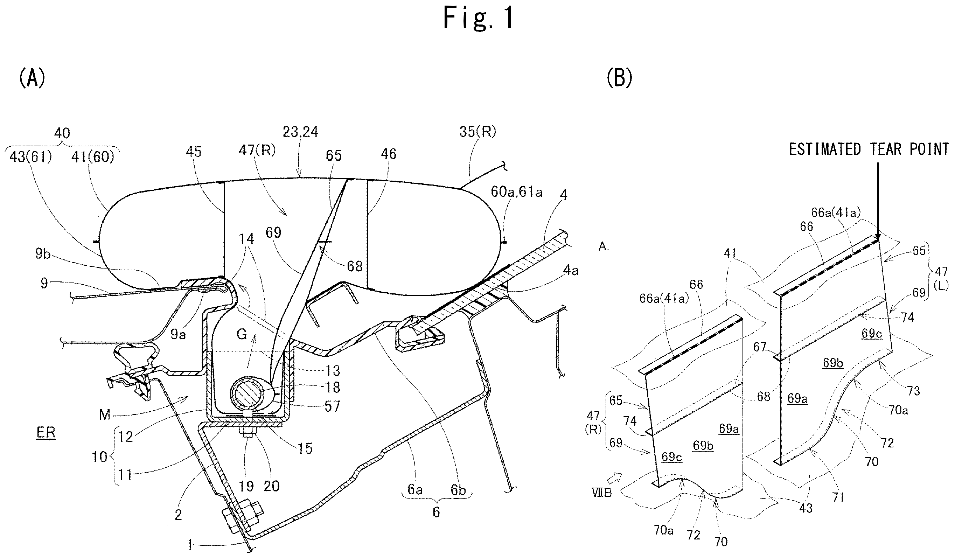

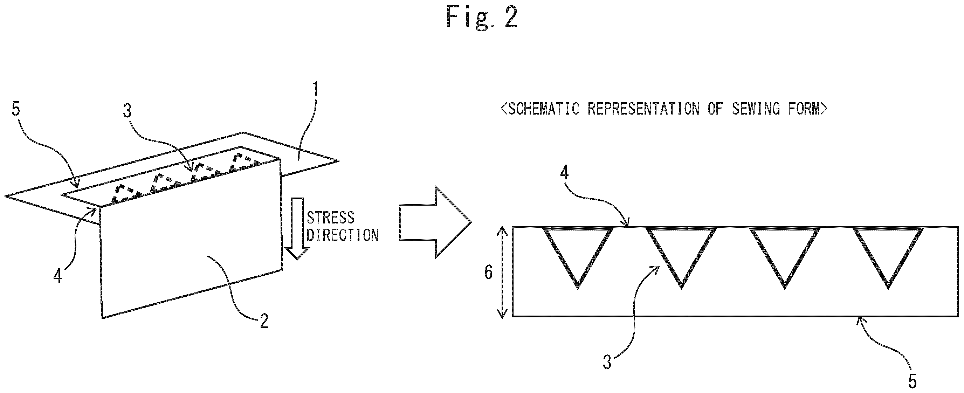

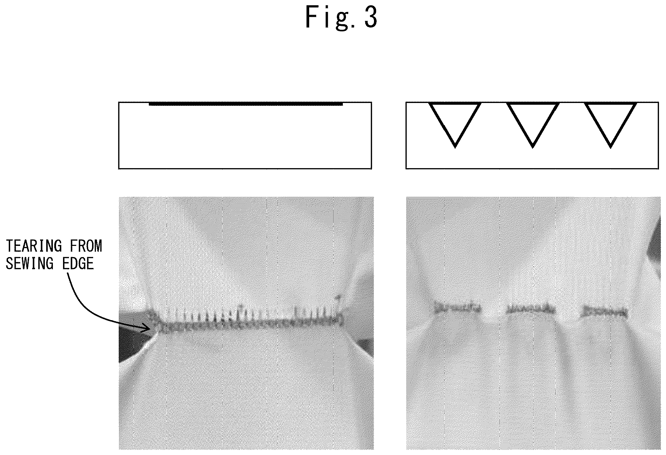

PTL 3 relates to a collision protection device for passengers inside a vehicle, and especially an automobile, comprising a cushion or cover plate, an airbag, an anchoring component, an electronic or mechanical device and a gas generator, the airbag comprising a covered or uncovered woven fabric, a stock (2) and a top (1) having a gas inlet opening, optionally with a flame preventing device, and a monolayer or multilayer safety stop band (corresponding to a tether) (3), wherein the edges of the safety stop band are anchored to the inner edges of the safety stop band by a roughly circular or rectangular seam (4), together with one or more of the top, bottom, and other components (see relevant Figs. 1 to 4). PTL 3 proposes a double sewing closure which is essentially oblong but rounder on the side that faces the force than on the side where force is not applied, a single assembly with a closed circular form provided on the side where the seam as a whole faces impact, and a double seam which is open on the side where force is not applied (see relevant Fig. 2a, Fig. 2b and Fig. 3), as forms of seams which eliminate force on the safety stop band under stress, since under a load, the resulting force must be fully and safely transmitted to the connecting components (top and bottom) through the shape of the safety stop band and connection points (transmission of force too rapidly creates a risk of damage not only to the joints but also to the components), and because application of force to the safety stop band produces a particularly strong force in the X direction (the side facing the force), whereas the force does not act and is minimal in the Y direction (the side not facing the force, see relevant Fig. 1). This is also a driving seat airbag having a defined deployed inflated structure with a thin-string tether.

However, the tether described in PTL 3 has relatively narrow overall width, with the panel and tether being connected by a single continuous seam.

Conventional airbags in vehicle-mounted airbag devices have been constructed so that a tether connecting together opposing panels determines the distance between the opposing panels, for when the thickness after full inflation is to be defined.

PTL 1 describes a pedestrian airbag wherein the tether between opposing panels is a wide tether reaching a length of about 1/2 to 1/3 of the vehicle width. The tether supports the deployed inflated structure of the airbag which covers the wide hood cover (bonnet) of the vehicle.

However, PTL 1 does not specifically describe the manner of the seam between the panel and tether (composed of the joint of the split body), nor does it describe the strength of the seam.

PTL 2 discloses providing a bag structure for an airbag device that has a low inertial mass for the bag and can reduce the number of parts and lower production cost, the airbag device having a bag 21 formed by sewing a seam between a gas inlet side half 21a in which a gas inlet is formed, and a butting side half 21b, with placement of a cloth string 23 (corresponding to a tether), one end of which is attached to the gas inlet side half 21a inside the bag 21 and the other end of which is sewn inside the butting side half 21b, the shape of the bag 21 being restricted by the string 23 during inflated deployment, wherein the string 23 is placed so that the direction in which the weft or warp extends is diagonal to the lengthwise direction of the string 23 (bias placement), while the other end of the string 23 is sewn to the inner surface of the butting side half 21b, setting non-sewn parts δ of prescribed widths on both sides in the widthwise direction. PTL 2 states that sewing to a test piece at a section beyond the full width of the tether, or sewing at a section approximately equal to the full width of the tether, has tended to result in greater tendency for tearing, compared to sewing with non-sewn parts of prescribed width set on both sides of the tether (see relevant Table 1). PTL 2 also states that if the sewn section is essentially rectangular with C-chamfering on both edge corners (angle α) to gradually increase the area in the lengthwise direction, and sewing is in an approximately ellipsoid manner while gently varying the area at both ends in the lengthwise direction, then it is possible to prevent inconveniences such as peeling, without concentration of stress at the seams, even when impactful force is exerted on the tether during inflated deployment of the bag (see the relevant Fig. 4b, Fig. 5 and Fig. 6). This is a driving seat airbag having a defined deployed inflated structure with a thin-string tether. For sewing of the tether, a geometric seam line, such as an approximately ellipsoid shape, is proposed.

However, the tether described in PTL 2 has relatively narrow overall width, with the panel and tether being connected by a single continuous seam.

PTL 3 relates to a collision protection device for passengers inside a vehicle, and especially an automobile, comprising a cushion or cover plate, an airbag, an anchoring component, an electronic or mechanical device and a gas generator, the airbag comprising a covered or uncovered woven fabric, a stock (2) and a top (1) having a gas inlet opening, optionally with a flame preventing device, and a monolayer or multilayer safety stop band (corresponding to a tether) (3), wherein the edges of the safety stop band are anchored to the inner edges of the safety stop band by a roughly circular or rectangular seam (4), together with one or more of the top, bottom, and other components (see relevant Figs. 1 to 4). PTL 3 proposes a double sewing closure which is essentially oblong but rounder on the side that faces the force than on the side where force is not applied, a single assembly with a closed circular form provided on the side where the seam as a whole faces impact, and a double seam which is open on the side where force is not applied (see relevant Fig. 2a, Fig. 2b and Fig. 3), as forms of seams which eliminate force on the safety stop band under stress, since under a load, the resulting force must be fully and safely transmitted to the connecting components (top and bottom) through the shape of the safety stop band and connection points (transmission of force too rapidly creates a risk of damage not only to the joints but also to the components), and because application of force to the safety stop band produces a particularly strong force in the X direction (the side facing the force), whereas the force does not act and is minimal in the Y direction (the side not facing the force, see relevant Fig. 1). This is also a driving seat airbag having a defined deployed inflated structure with a thin-string tether. For sewing of the tether, the use of a geometric seam line such as an approximate ellipsoid shape has been proposed, with the tether also curved along the seam line.

However, the tether described in PTL 3 has relatively narrow overall width, with the panel and tether being connected by a single continuous seam.

### [CITATION LIST]

### [PATENT LITERATURE]

[PTL 1] Japanese Unexamined Patent Publication No. 2019-172170
[PTL 2] Japanese Unexamined Utility Model Publication HEI No. 05-046615
[PTL 3] Japanese Patent Public Inspection HEI No. 11-501269

### SUMMARY

### [TECHNICAL PROBLEM]

Thinner base fabrics are in demand for increasingly lighter weights and compact structures of airbags, but since a thin base fabric generally lowers strength, this increases the risk of tearing at seams. It is therefore important to reduce tearing by the manner of sewing (the form of the sewing assembly).

The present inventors focused on the fact that sewing between a wide tether fabric and base fabric panel as described in PTL 1, for example, creates origins for tearing at the edges of the seams due to concentration of stress during inflated deployment, tending to lead to damage to the seams, as shown in Fig. 1. Such seam damage must be avoided in order to maintain internal pressure in the airbag in order to protect the human body (of a pedestrian).

Because the strength of a wide tether is higher than a narrow-width tether, it allows optimization of design for sections that are subjected to stress during inflated deployment of the airbag, but since this also increases the potential for tearing at the seam points due to concentration of stress, it is important to reduce this potential.

In light of these circumstances it is an object of the present invention to provide an airbag with reduced tearing at seams, the airbag having wide tether cloths sewn together so that opposing base fabric panels maintain a predetermined thickness during inflation, as well as a method for producing the airbag using a sewing form with high strength.

Thinner base fabrics are in demand for increasingly lighter weights and compact structures of airbags, but since a thin base fabric generally lowers strength, this increases the risk of tearing at seams. It is therefore important to reduce tearing by the manner of sewing (the form of the sewing assembly).

The present inventors focused on the fact that sewing between a wide tether fabric and base fabric panel as described in PTL 1, for example, creates origins for tearing at the edges of the seams due to concentration of stress during inflated deployment, tending to lead to damage to the seams, as shown in Fig. 1. Such seam damage must be avoided in order to maintain internal pressure in the airbag in order to protect the human body (of a pedestrian).

Because the strength of a wide tether is higher than a narrow-width tether, it allows optimization of the design for sections that are subjected to stress during inflated deployment of the airbag, but since this also increases the potential for tearing at the seam points due to concentration of stress, it is important to reduce this potential.

In light of these circumstances it is an object of the present invention to provide an airbag with reduced tearing at seams, the airbag having wide tether cloths sewn together so that opposing base fabric panels maintain a predetermined thickness during inflation, as well as a method for producing the airbag using a sewing form with high strength.

### [SOLUTION TO PROBLEM]

As a result of diligent experimentation with the aim of solving this problem, the present inventors have found, unexpectedly, that the problem can be solved by the specific manner of sewing (sewing form) described below, and the invention has been completed upon this finding.

Specifically, the present invention provides the following.
[1] An airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
   wherein the stitching between the base fabric panels and the tether cloth includes multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.
[2] The airbag according to [1] above, wherein the prescribed width of the tether cloth is 50 mm to 500 mm.
[3] The airbag according to [1] or [2] above, wherein the straight linear seam length is 5 mm to 100 mm.
[4] The airbag according to any one of [1] to [3] above, wherein the spacings between the straight linear seams arranged along the imaginary line are 5 mm to 50 mm.
[5] The airbag according to any one of [1] to [4] above, wherein the ratio: (straight linear seam spacing/straight linear seam length), as the ratio of the straight linear seam spacing with respect to the straight linear seam length, is 0.2 to 1.5.
[6] The airbag according to any one of [1] to [5] above, wherein the bending angle at the edges of the straight linear seams is 60° to 120°.
[7] The airbag according to any one of [1] to [6] above, wherein the lengths of the nonlinear sections at the edges of the straight linear seams is 3 mm to 50 mm.
[8] The airbag according to any one of [1] to [7] above, wherein the number of multiple straight linear seams arranged discretely along the imaginary line is 2 to 20 per 10 cm length of the imaginary line.
[9] The airbag according to any one of [1] to [8] above, wherein the straight linear seams are polygonal or half-circular, or portions thereof, having one side shared with the imaginary line.
[10] The airbag according to any one of [1] to [9], wherein each straight linear seam is part of a different seam.
[11] The airbag according to any one of [1] to [10] above, wherein the straight linear seams are parts of continuous square waves on the imaginary line.
[12] The airbag according to any one of [1] to [11] above, wherein the airbag is a pedestrian airbag.
[13] A method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
   a step of stitching the base fabric panels and tether cloth in a manner to include multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.
[14] The method for producing an airbag according to [13], which comprises a step of continuously sewing so that the straight linear seams are part of a continuous seam.

As a result of diligent experimentation with the aim of solving this problem, the present inventors have found, unexpectedly, that the problem can be solved by the specific manner of sewing (specific sewing form) described below, and the invention has been completed upon this finding.

Specifically, the present invention provides the following.
[15] An airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
   wherein the stitching between the base fabric panels and the tether cloth includes multiple nonlinear seams protruding toward the side opposite from the seam allowance end of the tether cloth, the apexes of the protrusions of the multiple nonlinear seams being on an imaginary line extending in the widthwise direction of the tether cloth.
[16] The airbag according to [15] above, wherein the prescribed width of the tether cloth is 100 mm to 500 mm.
[17] The airbag according to [15] or [16] above, wherein the distance between the part of each multiple nonlinear seam aligned along the imaginary line which is furthest from the imaginary line, and the imaginary line, is 1 mm to 100 mm.
[18] The airbag according to any one of [15] to [17], wherein the width of each nonlinear seam is 5 mm to 100 mm, where the widths of the nonlinear seams are the lengths of the multiple nonlinear seams aligned along the imaginary line, in the direction parallel to the imaginary line.
[19] The airbag according to any one of [15] to [18], wherein the value calculated as (distance between the part furthest from the imaginary line and the imaginary line)/(width of the nonlinear seam) is 0.1 to 2.0.
[20] The airbag according to any one of [15] to [19] above, wherein the spacing between the apexes of the protrusions of the seams of adjacent curves is 5 mm to 100 mm.
[21] The airbag according to any one of [15] to [20] above, wherein the value of the spacing between the apexes of the protrusions of the seams of adjacent curves minus the widths of the nonlinear seams is 0 mm to 50 mm.
[22] The airbag according to any one of [15] to [21], wherein the value calculated as (spacing between apexes of the protrusions of the nonlinear seams - width of seam on a circular arc)/(width of the nonlinear seam) is 0 to 1.5.
[23] The airbag according to any one of [15] to [22] above, wherein the number of nonlinear seams aligned along the imaginary line is 2 to 20 per 10 cm length of the imaginary line.
[24] The airbag according to any one of [15] to [23] above, wherein the nonlinear seam shapes are parts of circular or elliptical shapes.
[25] The airbag according to any one of [15] to [24], wherein the multiple nonlinear seams aligned along the imaginary line form parts of different seams, and are discrete.
[26] The airbag according to any one of [15] to [25] above, wherein the nonlinear seams are parts of continuous seams.
[27] The airbag according to any one of [15] to [26] above, wherein the nonlinear seams are parts of continuous sine curves parallel to the imaginary line.
[28] The airbag according to any one of [15] to [27] above, wherein the airbag is a pedestrian airbag.
[29] A method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
   a step of stitching between the base fabric panels and the tether cloth which includes multiple nonlinear seams protruding toward the side opposite from the seam allowance end of the tether cloth, wherein the apexes of the protrusions of the multiple nonlinear seams are on an imaginary line extending in the widthwise direction of the tether cloth.
[30] The method for producing an airbag according to [29] above, which comprises a step of continuously sewing so that the nonlinear seams are all or part of a continuous seam.

### [ADVANTAGEOUS EFFECTS OF INVENTION]

The invention provides an airbag which has reduced tearing at the seams due to a specific sewing form for the seams, the airbag being made by sewing a wide tether cloth between opposing base fabric panels so that a predetermined thickness is maintained when it is inflated, as well as a method for producing it. In this specific sewing form, since the straight linear seams are discrete and nonlinear sections directed toward the seam allowance end (the depth direction) of the tether cloth are present at the edge of each seam, the amount of stitching is greater compared to simple straight linear seams, while applied stress is diffused in the depth direction, thereby further increasing the strength. Moreover, since this specific sewing form has numerous discrete straight linear seams with numerous seam edges as well, this increases the number of locations where stress tends to concentrate, compared to a simple single straight linear seam with only two edges, resulting in reduced stress per edge and preventing tearing from the edges.

The airbag of the invention can therefore be suitably used as an automobile airbag, and especially as a pedestrian airbag.

The invention provides an airbag which has reduced tearing at the seams due to a specific sewing form for the seams, the airbag being made by sewing a wide tether cloth between opposing base fabric panels so that a predetermined thickness is maintained when it is inflated, as well as a method for producing it. In this specific sewing form, the multiple nonlinear seams protruding to the opposite side from the seam allowance end (the depth direction) of the tether cloth (the side subjected to stress) are preferably discrete, and since nonlinear sections (partial curves) are present which are directed toward the seam allowance end of the tether cloth, the amount of stitching is greater compared to simple straight linear seams, while applied stress is diffused in the depth direction, thereby further increasing the strength. Moreover, since this specific sewing form has numerous nonlinear sections (partial curves) as well when the multiple nonlinear seams are discrete, this increases the number of locations where stress tends to concentrate, compared to a simple single straight linear seam with only two edges, and yet it results in reduced stress per edge, to prevent tearing from the edges.

The airbag of the invention can therefore be suitably used as an automobile airbag, and especially as a pedestrian airbag.

### BRIEF DESCRIPTION OF DRAWINGS

Fig. 1 is a diagram showing an example of a pedestrian airbag covering from the hood panel of the automobile up to the top leading edge of the cowl or windshield, and a stitched section between the tether part of the airbag and the panel base fabric, during inflated deployment, as described in PTL 1. Diagram (A) is a cross-section of the automobile, and (B) is a schematic view.
Fig. 2 is a pair of diagrams illustrating how the a seam (sewing form) appears in a tether cloth and panel base fabric for the Examples and Comparative Examples.
Fig. 3 is a pair of photographs showing tearing at the sewing edge in a test piece of a Comparative Example (left), and absence of tearing with the sewing form of the embodiment (right).
Fig. 4 is a set of diagrams showing the sewing forms of Examples 1-1 to 1-7 and Comparative Examples 1-1 and 1-2.
Fig. 5 is a set of diagrams illustrating in overview the method of measuring sewing strength for the Examples and Comparative Examples.
Fig. 6 is a diagram showing an example of a pedestrian airbag covering from the hood panel of the automobile up to the top leading edge of the cowl or windshield, and a stitched section between the tether part of the airbag and the panel base fabric, during inflated deployment, as described in PTL 1. Diagram (A) is a cross-section of the automobile, and (B) is a schematic view.

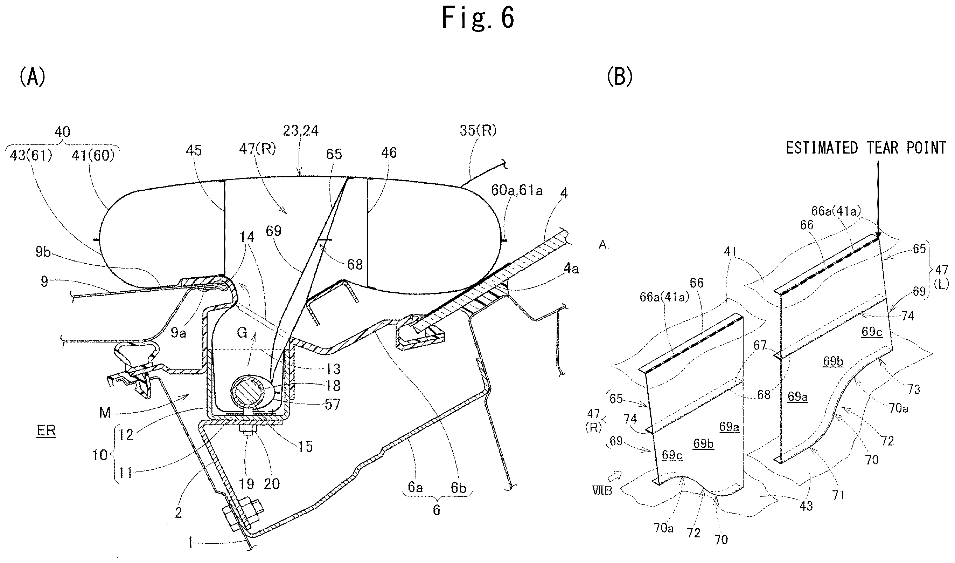

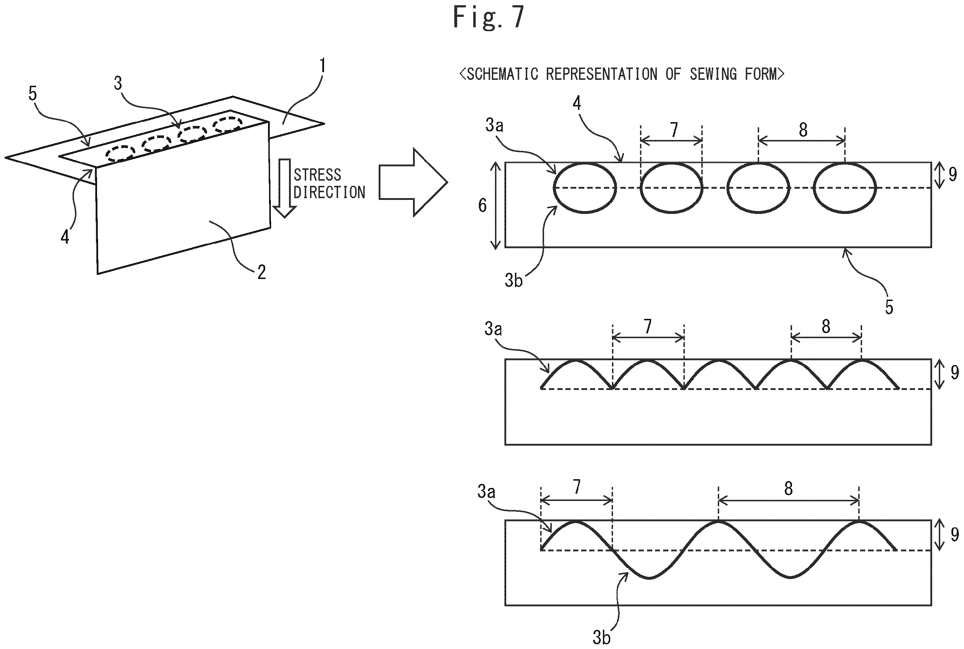

Fig. 7 is a pair of diagrams illustrating how seams (sewing forms) appear in tether cloths and panel base fabrics of the Examples and Comparative Examples. In reference to the right diagram in Fig. 6, the "(linear) widths of the nonlinear seams (the lengths of the multiple nonlinear seams aligned along the imaginary line) in the direction parallel to the imaginary line" is the length of 7, the "spacing between the apexes of the protrusions of the nonlinear seams aligned along the imaginary line" is the length of 8, and the "distance between the part of each multiple nonlinear seam aligned along the imaginary line which is furthest from the imaginary line and the imaginary line" is the length of 9.
Fig. 8 is a pair of photographs showing tearing at the sewing edge in a test piece of a Comparative Example (left), and absence of tearing with the sewing form of the embodiment (right).
Fig. 9 is a set of diagrams showing the sewing forms of Examples 2-1 to 2-3, 2-4, 2-4b and 2-5 to 2-7, and Comparative Examples 2-1 and 2-2.
Fig. 10 is a set of diagrams illustrating in overview a test piece in the method of measuring sewing strength for the Examples and Comparative Examples.

### DESCRIPTION OF EMBODIMENTS

The invention will now be explained in detail by embodiments.

One embodiment of the invention is an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
wherein the stitching between the base fabric panels and the tether cloth includes multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.

The seam between the base fabric panel and the tether cloth may be the seam shown as 66a (41a) in (B) for the pedestrian airbag described in PTL 1 shown in Fig. 1, for example.

The present inventors found that stress tends to concentrate at the edges of the seams and form tearing origins, and devised a seam with a specific sewing form that can further reduce occurrence of tearing.

As mentioned above, the "specific sewing form" referred to herein is a sewing form in which the seams between the base fabric panels and the tether cloth include multiple straight linear seams arranged discretely along an imaginary line extending in the widthwise direction of the tether cloth, and the edges of the straight linear seams having nonlinear sections that are nonlinear with predetermined angles and predetermined lengths from the imaginary line toward the seam allowance edge on the tether cloth.

The term "imaginary line" as used herein refers to a folding line when one imagines a form in which the folds of the tether cloth sheet overlap with the base fabric panel sheet when the base fabric panels and tether cloth are stitched together. This corresponds approximately to the location (line) of action of the tether restricting the spacing with the pair of base fabric panels, where it is subjected to inflation pressure during inflation of the airbag. Alternatively, the "imaginary line" may be a straight line or nonlinear seam design line for passage of a sewing machine needle when the panel base fabrics and tether cloth are sewn together.

An example of the specific sewing form is shown in Fig. 2, as a seam with inverted triangles aligned at a fixed spacing along an imaginary line. In the schematic representation of the sewing form in Fig. 2, the "imaginary line" corresponds to the line (4) at the upper end of the seam allowance of the tether cloth.

In this example, a plurality of inverted triangles are aligned on an imaginary line on one side, the total amount of the lengths on the one side ensuring a total sewing length at the parts subjected to stress as required for a wide tether, to avoid simple reduction in the amount of sewing due to excessive spacing between the seams, which results in lower strength. Since in this example the straight linear seams formed on one of the sides of each of the inverted triangles is discrete, and the edges of each of the seams has nonlinear sections (the other two sides of the inverted triangles) facing the seam allowance of the tether cloth (5 in Fig. 2), the amount of stitching is increased compared to a simple straight linear seam, while stress is dispersed in the direction of the seam allowance end (the lower end in the right diagram of Fig. 2) when it is subjected to stress, thereby increasing the strength (see Fig. 3 right). Wrinkles are produced in the panel base fabric, thus allowing the state of dispersed stress to be visualized. Moreover, since this example has numerous discrete straight linear seams with numerous seam edges as well (the apexes of the inverted triangles on the imaginary line), this increases the number of locations where stress tends to concentrate, compared to a simple single straight linear seam with only two edges, resulting in reduced stress per edge and preventing tearing from the edges (compare left and right diagrams of Fig. 3).

Fig. 4 shows another example of the specific sewing form for Examples 1-1 to 1-4, 1-6 and 1-7 below. It will be seen that all of these examples have the specific sewing form described above.

When the straight linear seams on the imaginary line are each part of different seams, as in Examples 1-1 to 1-5, folding is possible at sections without sewing threads during storage of the folded airbag, thus allowing the folded thickness of the seams to be reduced when folding is in the direction perpendicular to the imaginary line, and helping to improve the storability of the airbag.

The prescribed width of the tether cloth is preferably 50 mm to 500 mm, more preferably 100 mm to 500 mm, even more preferably 100 mm to 400 mm and most preferably 200 mm to 400 mm. The specific sewing form has strength allowing it to withstand wide tether stress within this range.

The length of a single straight linear seam of the multiple ones aligned discretely along an imaginary line extending in the widthwise direction of the tether cloth is preferably 5 mm to 100 mm and more preferably 10 mm to 50 mm. Within this range it will be possible to ensure a total amount of seams of sufficient length and a sufficient number of seam edges, to withstand stress during inflated deployment. An insufficient length reduces the amount of sewing on which stress acts.

The spacings between the straight linear seams arranged along the imaginary line is preferably 5 mm to 50 mm and more preferably 7 mm to 20 mm. Within this range it will be possible to ensure a total amount of seams of sufficient length and a sufficient number of seam edges, to withstand stress during inflated deployment. If the spacings are too large there will be less sewing on which stress acts, and if they are too narrow it will be difficult for the stress to diffuse.

The ratio: (straight linear seam spacing/straight linear seam length), as the ratio of the straight linear seam spacing with respect to the straight linear seam length, is preferably 0.2 to 1.5 and more preferably 0.3 to 1.0. Within this range it will be possible to ensure a total amount of seams of sufficient length and a sufficient number of seam edges, to withstand stress during inflated deployment.

The bending angle at the edges of the straight linear seams is preferably 60° to 120° and more preferably 70° to 110°. If the bending angle is less than 60° or greater than 120°, the sewing form will approach a dotted linear form and stress will be less able to diffuse in the depth direction when stress is applied (Fig. 2, bottom), thus reducing the strength. In other words, if the bending angles are too acute then the edges will be nearly straight linear, while if they are too obtuse the edges will likewise be nearly straight linear.

The lengths of the nonlinear sections at the edges of the straight linear seams is preferably 3 mm to 50 mm and more preferably 5 mm to 30 mm. If the lengths are less than 3 mm it will be difficult for applied stress to diffuse in the depth direction (Fig. 2, bottom), reducing the strength, while if they are greater than 50 mm the diffusion of pressure will be satisfactory but the increased number of seams will lower productivity. In other words, if the lengths are too short the edges will be nearly straight linear, resulting in fewer sections subjected to stress.

The multiple straight linear seams arranged discretely along the imaginary line are preferably present at 2 to 20, more preferably present at 2 to 10, even more preferably present at 3 to 10 and most preferably present at 4 to 7, per 10 cm length of the imaginary line. The lengths of the imaginary lines are the distances between two edges on the outermost side, of the edges of the multiple discretely arranged straight linear seams. Within this range it will be possible to ensure a total amount of seams of sufficient length and a sufficient number of seam edges, to withstand stress during inflated deployment.

The straight linear seams may be polygonal or half-circular, or portions thereof, with one side shared with the imaginary line, so long as the condition for the specific sewing form is satisfied. The straight linear seams may also be partial continuous square waves on the imaginary line.

The sewing form in Fig. 4 explained above and the following Examples 1-1 to 1-4, 1-6 and 1-7 is an example of the specific sewing form.

While the nonlinear sections may be on only one end, being nonlinear at both ends exhibits a higher effect for diffusion of stress. For a square wave, a smaller amplitude will approach a straight linear, resulting in fewer sections subjected to stress. If stress is diffused at each of the multiple straight linear seams arranged discretely along the imaginary line, it is not necessary for all of them to completely coincide with the imaginary line, and some may be disposed ahead of or behind the imaginary line. The specific sewing form may have the same inverted triangles aligned at intervals, or it may have inverted triangles and rectangles aligned in an alternating manner.

Sewing of the base fabric panels and tether cloth in a manner containing straight linear seams may be sewing to a test piece at a section beyond the full width of the tether, or sewing at a section approximately equal to the full width of the tether, or sewing with non-sewn parts of prescribed width set on both sides of the tether. If sewing of the base fabric panels and the tether cloth is sewing to a test piece at a section beyond the full width of the tether or sewing at a section approximately equal to the full width of the tether, then the deployed inflated structure of the airbag will be supported by the full width of the tether, resulting in satisfactory material utilization efficiency. If sewing is with non-sewn parts of prescribed width set on both sides of the tether, on the other hand, it will be possible to prevent extreme concentration of stress on the edges of the tether, allowing a base fabric with a lower size to be selected as the tether cloth, and contributing to storability of the airbag.

The airbag of the invention is preferably a pedestrian airbag.

One aspect of the invention is a method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
a step of stitching the base fabric panels and tether cloth in a manner to include multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.

The sewing method is not particularly restricted, and for example, it may be a specific sewing form in which the tether cloth and base fabric panels are sewn by plane sewing with flat overlapping, which eliminates excess time and effort for the sewing operation and therefore does not notably reduce productivity. The stitching means is also not particularly restricted, and for example, it may be manual sewing along a sewing line drawn in advance on the base fabric using a LU-2210 Series by Juki Co., or a programmed sewing form using an industrial sewing machine such as the AMS-221EN Series by Juki Co.

If the multiple straight linear seams arranged discretely along the imaginary line are parts of continuous seams, this will allow productivity to be improved by a step of continuous sewing. There will also be fewer sewing starts and sewing ends, thus contributing to a lower number of sewing defects.

The tether cloth is not particularly restricted, and may be a plain weave fabric with a woven density of 49/inch, woven using nylon 66 multifilament fibers with a total denier of 470 dtex and 136 filaments as the warp and weft yarns. A covering may also be layered to impart heat resistance to the tether cloth, by coating of a silicone resin at 25 g/m², for example.

The panel base fabric is not particularly restricted, and may be a plain weave fabric with a woven density of 72/inch, woven using nylon 66 multifilament fibers with a total denier of 235 dtex and 72 filaments as the warp and weft yarns. A covering may also be layered to impart heat resistance and internal pressure retention to the tether cloth, by coating of a silicone resin at 17 g/m², for example.

The stitching thread composing the specific sewing form is also not particularly restricted, and nylon 66 or polyester thread may be used as the stitching thread in a sewing machine. The stitching thread size is not particularly restricted but is preferably 400 dtex to 2000 dtex from the viewpoint of both strength and storability. The stitching thread preferably includes twisting from the viewpoint of sewing manageability, where the twisting may be single twisting or twisting of multiple raw threads such as triple twisting. The top and bottom threads may be the same or different.

The invention will now be explained in detail by embodiments.

One embodiment of the invention is an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
wherein the stitching between the base fabric panels and the tether cloth includes multiple nonlinear seams protruding toward the side opposite from the seam allowance end of the tether cloth, the apexes of the multiple nonlinear seams being on an imaginary line extending in the widthwise direction of the tether cloth.

The seam between each base fabric panel and the tether cloth may be the seam shown as 66a (41a) in diagram (B) for the pedestrian airbag described in PTL 1 shown in Fig. 6, for example.

The present inventors found that stress tends to concentrate at the edges of the seams and form tearing origins, and devised a seam with a specific sewing form that can further reduce occurrence of tearing.

As mentioned above, the "specific sewing form" referred to herein is a sewing form in which seams between the base fabric panels and the tether cloth include multiple nonlinear seams protruding toward the side opposite from the seam allowance end of the tether cloth, the apexes of the multiple nonlinear seams being on an imaginary line extending in the widthwise direction of the tether cloth.

The term "imaginary line" as used herein refers to a folding line when one imagines a form in which the folds of the tether cloth sheet overlap with the base fabric panel sheet when the base fabric panels and tether cloth are stitched together. This corresponds approximately to the location (line) of action of the tether restricting the spacing with the pair of base fabric panels, where it is subjected to inflation pressure during inflation of the airbag. Alternatively, the "imaginary line" may be a straight line or nonlinear seam design line for passage of a sewing machine needle when the panel base fabrics and tether cloth are sewn together.

An example of the specific sewing form is shown in Fig. 7, as a seam with circular forms aligned at a fixed spacing along an imaginary line. In the schematic representation of the sewing form in Fig. 7, the "imaginary line" corresponds to the line (4) at the upper end of the seam allowance of the tether cloth.

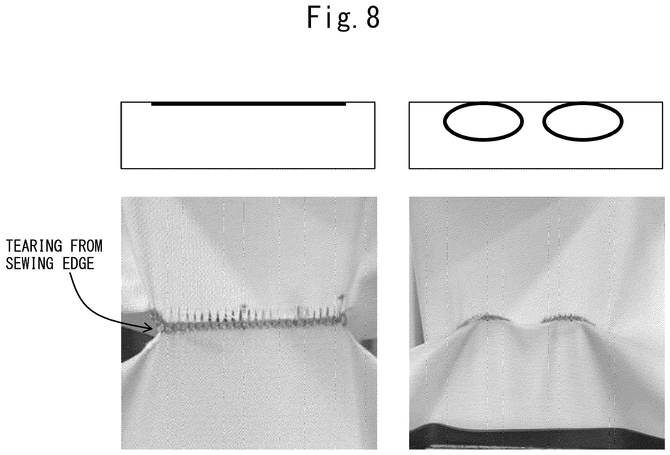

In this example, a plurality of circles are aligned on an imaginary line on one side, such that the total amount of the lengths of the portions that are the protrusions on the side opposite from the seam allowance end of the tether cloth ensure a total sewing length at the parts subjected to stress as required for a wide tether, to avoid simple reduction in the amount of sewing due to excessive spacing between the seams, which results in lower strength. Since in this example the nonlinear seams aligned on the imaginary line are discrete, with two nonlinear sections (partial curves) facing the edge of the seam allowance of the tether cloth (5 in Fig. 7) present at the seams, the amount of stitching is increased compared to a simple straight linear seam, while stress is dispersed in the direction of the seam allowance end (the lower end in the right diagram of Fig. 7) when it is subjected to stress, thereby increasing the strength (see Fig. 8 right). Wrinkles are produced in the panel base fabric, thus allowing the state of dispersed stress to be visualized. Moreover, since this example has numerous discrete circular seams with numerous nonlinear sections (partial curves) of the seams as well, this increases the number of locations where stress tends to concentrate, compared to a simple single straight linear seam with only two edges, resulting in reduced stress per location and preventing tearing from those locations (compare left and right diagrams of Fig. 8).

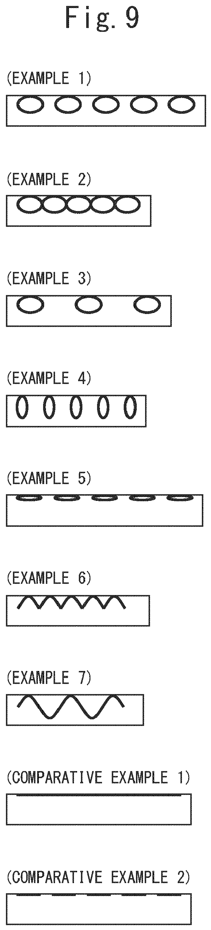

Fig. 9 shows another example of the specific sewing form for Examples 2-1 to 2-7 below. It will be seen that all of these examples have the specific sewing form described above.

When the nonlinear seams aligned along the imaginary line each form parts of different seams and are discrete, as in Examples 2-1 and 2-3 to 2-5, folding is possible at sections without sewing threads during storage of the folded airbag, thus allowing the folded thickness of the seams to be reduced when folding is in the direction perpendicular to the imaginary line, and helping to improve the storability of the airbag.

The prescribed width of the tether cloth is preferably 50 mm to 500 mm, more preferably 100 mm to 500 mm and even more preferably 200 mm to 400 mm. The specific sewing form has strength allowing it to withstand wide tether stress within this range.

The distance between the imaginary line extending in the widthwise direction of the tether cloth and the part of each multiple nonlinear seam aligned along the imaginary line which is furthest from the imaginary line, is preferably 1 mm to 100 mm, more preferably 5 mm to 50 mm and even more preferably 10 mm to 20 mm. Within this range it is possible to ensure nonlinear sections (partial curves) of sufficient length without affecting productivity.

When the multiple nonlinear seams protruding toward the side opposite from the seam allowance end of the tether cloth form parts of circles or elliptical shapes and sine curves, as shown in Fig. 7, the borders between the portions of the protrusions on the side opposite from the seam allowance end of the tether cloth and the portions protruding to the seam allowance end of the tether cloth are the parts where the multiple nonlinear seams protruding toward the side opposite from the seam allowance end of the tether cloth are furthest from the imaginary line. Stated differently, the multiple nonlinear seams protruding toward the side opposite from the seam allowance end of the tether cloth are the top parts, as divided by the borders where the protrusion shapes face upward and downward, in the examples of circles or sine curves in Fig. 7.

If the lengths of the multiple nonlinear seams aligned along the imaginary line extending in the widthwise direction of the tether cloth in the direction parallel to the imaginary line are the (straight) widths of the nonlinear seams, then the widths of the nonlinear seams are preferably 5 mm to 100 mm, more preferably 10 mm to 100 mm, even more preferably 10 mm to 50 mm and most preferably 20 mm to 50 mm. Within this range it will be possible to ensure seams of sufficient length to withstand stress during inflated deployment.

When multiple nonlinear seams form parts of circles or elliptical shapes or sine curves, as shown in Fig. 7, the lengths of the parts protruding to the side opposite from the seam allowance end of the tether cloth in the direction parallel to the imaginary line are the widths of the nonlinear seams, and the boundary between the part protruding to the side opposite from the seam allowance end of the tether cloth and the part protruding to the seam allowance end of the tether cloth is the start or end of the width of each nonlinear seam.

The value calculated by (distance between part furthest from the imaginary line and imaginary line)/(width of each nonlinear seam) for the nonlinear seam is preferably 0.1 to 2.0 and more preferably 0.5 to 1.0. Within this range it will be possible to ensure seams of sufficient length, and nonlinear sections (partial curves) of sufficient length to withstand stress during inflated deployment.

The spacing between apexes of the protrusions of the nonlinear seams aligned along the seam line is preferably 5 mm to 100 mm, more preferably 10 mm to 100 mm, even more preferably 15 mm to 100 mm and most preferably 20 mm to 50 mm. Within this range it will be possible to ensure a total amount of seams of sufficient length, and a sufficient number of nonlinear sections (partial curves) to withstand stress during inflated deployment. If the spacing is too wide the amount of stitching subjected to stress will be reduced, and if it is too narrow the locations will be less likely to concentrate stress, resulting in increased stress per location.

When the multiple nonlinear seams are partial circles or ellipses or sine curves, the locations furthest from the edge of the seam allowance of the tether cloth are the apexes of the protrusions of the nonlinear seams, as shown in Fig. 7. When the nonlinear seams have roughly straight linear portions on the imaginary line, the midpoints of those portions are the apexes of the nonlinear seams.

The values of the spacing between apexes of the protrusions of the nonlinear seams aligned along the imaginary line minus the width of each nonlinear seam (corresponding to the distance between the edges of the nonlinear seams) is preferably 0 mm to 50 mm and more preferably 3 mm to 30 mm. Within this range it will be possible to ensure the total amount of seams of sufficient length to withstand stress during inflated deployment.

The value calculated by (spacing between apexes of the protrusions of the nonlinear seams - width of each nonlinear seam)/(width of each nonlinear seam) for the nonlinear seams is preferably 0 to 1.5 and more preferably 0 to 1.0. Within this range it will be possible to ensure the total amount of seams of sufficient length to withstand stress during inflated deployment.

The nonlinear seams aligned along the imaginary line are preferably present at 2 to 20, more preferably present at 2 to 10, even more preferably present at 3 to 10 and most preferably present at 4 to 7, per 10 cm length of the imaginary line. The lengths of the imaginary lines are the distances between two seam edges on the outermost side, of the edges of the multiple nonlinear seams. Within this range it will be possible to ensure a total amount of seams of sufficient length, and a sufficient number of nonlinear sections (partial curves) to withstand stress during inflated deployment.

The nonlinear seams may be circular or elliptical, or portions thereof, with one side shared with the imaginary line, so long as the condition for the specific sewing form is satisfied. The nonlinear seams may be continuous instead of discrete, or they may be portions of a continuous sine curve parallel to the imaginary line.

The sewing form in Fig. 9 explained above and the following Examples 2-1 to 2-7 is an example of the specific sewing form.

In the case of thin circles or arcs, this becomes straight linear, resulting in less portion for stress to escape. The same applies with a small amplitude of the sine curve. Moreover so long as stress is diffused at each of the nonlinear seams, it is not necessary for the nonlinear seams to be disposed so that all of the apexes of the protrusions completely coincide with the imaginary line, and some may be disposed ahead of or behind the imaginary line. The specific sewing form may have the same curves aligned at intervals, for example, or it may have curves and polygons aligned in an alternating manner.

Sewing of the base fabric panels and tether cloth in a manner containing nonlinear seams may be sewing to a test piece at a section beyond the full width of the tether, or sewing at a section approximately equal to the full width of the tether, or sewing with non-sewn parts of prescribed width set on both sides of the tether. If sewing of the base fabric panels and the tether cloth is sewing to a test piece at a section beyond the full width of the tether or sewing at a section approximately equal to the full width of the tether, then the deployed inflated structure of the airbag will be supported by the full width of the tether, resulting in satisfactory material utilization efficiency. If sewing is with non-sewn parts of prescribed width set on both sides of the tether, on the other hand, it will be possible to prevent extreme concentration of stress on the edges of the tether, allowing a base fabric with a lower size to be selected as the tether cloth, and contributing to storability of the airbag.

The airbag of the invention is preferably a pedestrian airbag.

Another aspect of the invention is a method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
a step of stitching between the base fabric panels and the tether cloth which includes multiple nonlinear seams protruding toward the side opposite from the seam allowance end of the tether cloth, wherein the apexes of the protrusions of the multiple nonlinear seams are on an imaginary line extending in the widthwise direction of the tether cloth.

The sewing method is not particularly restricted, and for example, it may be a specific sewing form in which the tether cloth and base fabric panels are sewn by plane sewing with flat overlapping, which eliminates excess time and effort for the sewing operation and therefore does not notably reduce productivity. The stitching means is also not particularly restricted, and for example, it may be manual sewing along a sewing line drawn in advance on the base fabric using a LU-2210 Series by Juki Co., or a programmed sewing form using an industrial sewing machine such as the AMS-221EN Series by Juki Co.

The multiple nonlinear seams aligned along the imaginary line may be all or part of a continuous seam, allowing productivity to be improved by a step of continuous sewing. There will also be fewer sewing starts and sewing ends, thus contributing to a lower number of sewing defects.

The tether cloth is not particularly restricted, and may be a plain weave fabric with a woven density of 49/inch woven using nylon 66 multifilament fibers with a total denier of 470 dtex and 136 filaments as the warp and weft yarns. A covering may also be layered over to impart heat resistance to the tether cloth, by coating of a silicone resin at 25 g/m², for example.

The panel base fabric is not particularly restricted, and may be a plain weave fabric with a woven density of 72/inch, woven using nylon 66 multifilament fibers with a total denier of 235 dtex and 72 filaments as the warp and weft yarns. A covering may also be layered over to impart heat resistance and internal pressure retention to the tether cloth, by coating of a silicone resin at 17 g/m ², for example.

The stitching thread composing the specific sewing form is also not particularly restricted, and nylon 66 or polyester thread may be used as the stitching thread in a sewing machine. The stitching thread size is not particularly restricted but is preferably 400 dtex to 2000 dtex from the viewpoint of both strength and storability. The stitching thread preferably includes twisting from the viewpoint of sewing manageability, where the twisting may be single twisting or twisting of multiple raw threads such as triple twisting. The top and bottom threads may be the same or different.

### EXAMPLES

The present invention will now be explained in detail using Examples and Comparative Examples.

The materials and the methods for measuring the physical properties used in the Examples and Comparative Examples will be explained first.

### [Panel base fabric]

A plain weave fabric woven using nylon 66 multifilament fibers as the warp yarn and weft yarn was coated with a silicone resin. The total fineness of the base fabric used was 235 dtex, the number of filaments was 72, the woven density was 72/inch and the silicone resin coating amount was 17 g/m ².

### [Tether cloth]

A plain weave fabric woven using nylon 66 multifilament fibers as the warp yarn and weft yarn was coated with a silicone resin. The total fineness of the base fabric used was 470 dtex, the number of filaments was 136, the woven density was 49/inch and the silicone resin coating amount was 25 g/m ².

### [Sewing thread]

Airbag sewing thread (total fineness: 1880 dtex, nylon 66 multifilament fibers, 940 dtex, double-twisted) by Gunze, Ltd. was used for the top thread and bottom thread.

### [Sewing machine]

A LU-2210W-7 by Juki Col was used for sewing of the specific sewing form.

### [Fabrication of test pieces]

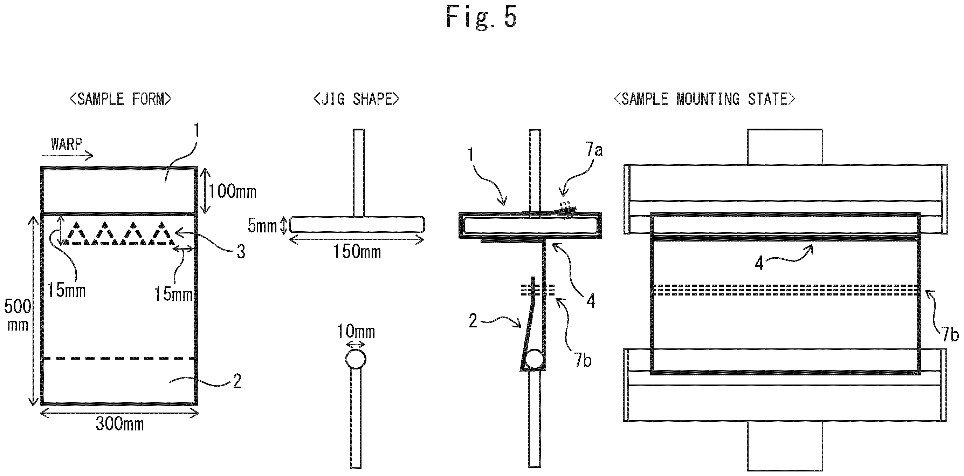

As shown by "sample form" in Fig. 5, the panel base fabric and the tether cloth were each cut into strips along the base fabric grain to 300 mm warp × 500 mm weft. Next, the tether cloth was placed over the main base fabric with a shift of 100 mm in the weft direction, and sewn with sewing thread using a sewing machine in a specific sewing form with a stitch number of 50/10 cm in a range of 270 mm within the center in the widthwise direction, leaving a tether cloth seam allowance of 15 mm. A repeat of 3 stitches (or overlapping stitches) was formed at the beginning and end of sewing. The edges were mutually overlapped in the lengthwise direction of the main base fabric so that the strip formed a loop, and the overlapping part was sewed by 3 rows of linear sewing (7a) in the warp direction of the base fabric, with a stitch number of 35/10 cm. The loop length was 320 mm around the circumference. The edges of the tether cloth furthest from the specific sewing form were folded and the tether cloth was sewed together by 3 rows of linear sewing (7b) in the warp direction of the base fabric with a stitch number of 35/10 cm, at the middle part of the specific sewing form and the fold-over section. The length from the fold-over section to the imaginary line of the specific sewing form was 200 mm. Finally, it was confirmed that the overlapping parts of the main fabric and the tether cloth were not skewed, and that sewing on the imaginary line and sewing of the overlapping part were along the warp direction of the base fabric. If shifted there is a risk of imbalanced stress on the seam during measurement, potentially resulting in measurement error.

### (1) Measurement of seam strength per 1 cm imaginary line (N/cm)

A jig as shown by "Jig shape" in Fig. 5, holding the test piece by a loop of the main base fabric and tether cloth, was mounted on a TENSELON universal material tester by A&D Co., Ltd. With the test piece mounted on the tester, as seen from the lateral direction (the direction allowing the thickness of the test piece to be observed), as indicated by "Sample mounting state" in Fig. 5, it was adjusted so that the tether cloth was perpendicular to the main base fabric (forming a T-shape). The stroke was adjusted during this time so that the tether cloth was pulled parallel to the direction of tension, the stroke (distance from the imaginary line to the anchoring point of the tether cloth) being 200 to 400 mm. Measurement was performed at a pull rate of 300 mm/min, dividing the maximum strength during tearing by the length of the imaginary line, to determine the seam strength per 1 cm of imaginary line length. Test pieces having a seam strength per 1 cm of imaginary line (N/cm) of less than 350 N/cm were evaluated as "P", those with 350 N/cm or greater and less than 450 N/cm were evaluated as "F", and those with 450 N/cm or greater were evaluated as "G".

### (2) Measurement of seam bending thickness (mm) (perpendicular to imaginary line)

A test piece fabricated as described above was folded perpendicular to the imaginary line and the folded crease of the test piece was fitted under a 3 cm × 6 cm plate, applying a load total of 1 Kg together with the plate for 30 seconds. The probe of a thickness gauge (FFA-10 by Ozaki Manufacturing Co., Ltd.) was then set with the center of the crease at the center line of the probe, and the value was measured after 1 minute. The position of the crease was set to have the minimum number of sewing lines running through the crease, and the average of measurement at 3 locations was recorded as the seam bending thickness value. Samples with a bending thickness of 3.5 mm or smaller were evaluated as "G", and those with a bending thickness larger than 3.5 were evaluated as "P".

### [Examples 1-1 to 1-7, Comparative Examples 1-1 and 1-2]

Test pieces were fabricated having seams with the sewing forms shown in Table 1, and the seam strength per 1 cm of imaginary line (N/cm) and the seam bending thickness (mm) (perpendicular to the imaginary line) were measured. The results are shown in Table 1 below.

### [Table 1]

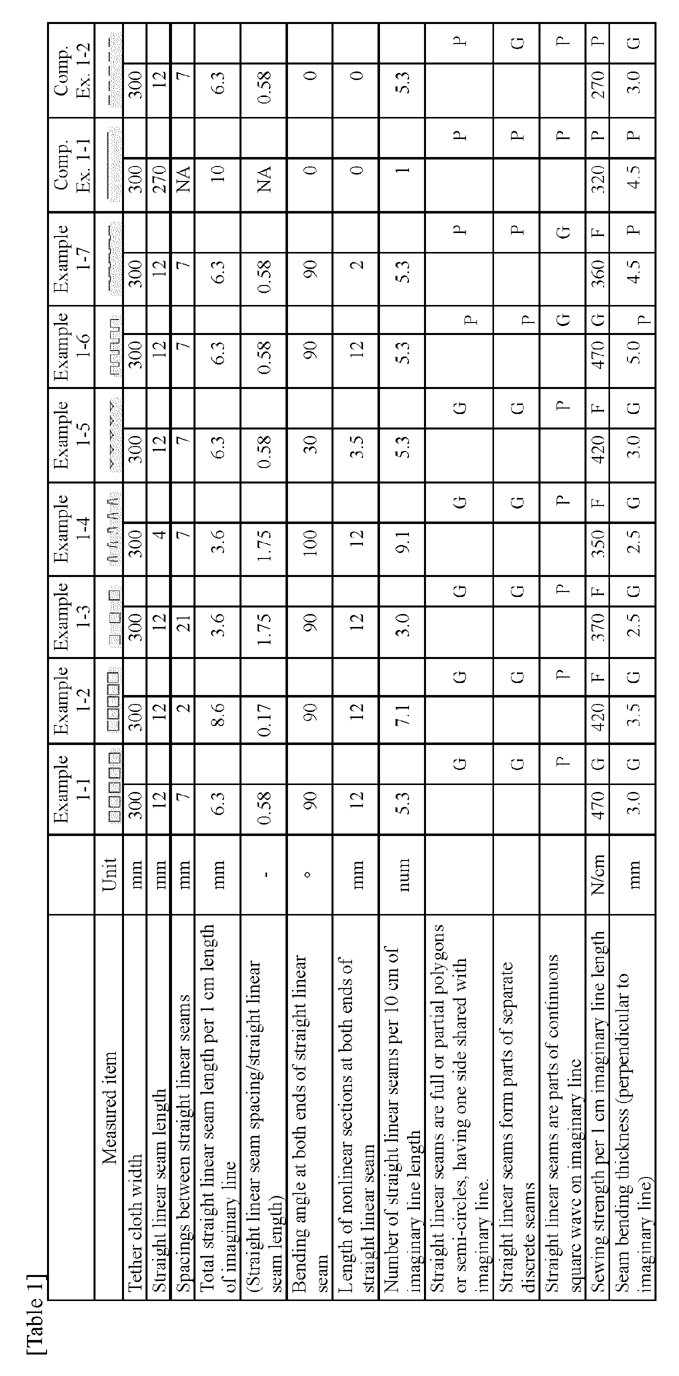

In comparing Examples 1-1 to 1-3, it is seen that the seam strength per 1 cm of imaginary line is reduced when the ratio of the spacings between the straight linear seams are outside of the range of 0.2 to 1.5.

Based on Example 1-4 it is seen that the seam strength per 1 cm of imaginary line is reduced when the straight linear seam lengths are less than 5 mm.

From Example 1-5 it is seen that the seam strength per 1 cm of imaginary line is reduced when the bending angle is less than 60°.

From Example 1-6 it is seen that if some of the seams are square waves, the seam strength per 1 cm of imaginary line is not reduced but the seam bending thickness (mm) increases.

From Example 1-7 it is seen that if some of the seams are square waves and the lengths of the nonlinear sections are less than 3 mm, the seam strength per 1 cm of imaginary line is reduced and the seam bending thickness (mm) increases.

From Comparative Example 1-1 it is seen that due to the lack of spacings and nonlinear sections, the seam strength per 1 cm of imaginary line was further reduced and the seam bending thickness (mm) was further increased.

From Comparative Example 1-2 it is seen that since spacings were present and nonlinear sections were absent, the total amount of seams was reduced and the seam strength per 1 cm of imaginary line was even further reduced.

The present invention will now be explained in detail using Examples and Comparative Examples.

The materials and the methods for measuring the physical properties used in the Examples and Comparative Examples will be explained first.

### [Panel base fabric]

A plain weave fabric woven using nylon 66 multifilament fibers as the warp yarn and weft yarn was coated with a silicone resin. The total fineness of the base fabric used was 235 dtex, the number of filaments was 72, the woven density was 72/inch and the silicone resin coating amount was 17 g/m ².

### [Tether cloth]

A plain weave fabric woven using nylon 66 multifilament fibers as the warp yarn and weft yarn was coated with a silicone resin. The total fineness of the base fabric used was 470 dtex, the number of filaments was 136, the woven density was 49/inch and the silicone resin coating amount was 25 g/m ².

### [Sewing thread]

Airbag sewing thread (total fineness: 1880 dtex, nylon 66 multifilament fibers, 940 dtex, double-twisted) by Gunze, Ltd. was used for the top thread and bottom thread.

### [Sewing machine]

A LU-2210W-7 by Juki Col was used for sewing of the specific sewing form.

### [Fabrication of test pieces]

As shown by "sample form" in Fig. 5, the panel base fabric and the tether cloth were each cut into strips along the base fabric grain to 300 mm warp × 500 mm weft. Next, the tether cloth was placed over the main base fabric with a shift of 100 mm in the weft direction, and sewed with sewing thread using a sewing machine in a specific sewing form with a stitch number of 50/10 cm in a range of 270 mm within the center in the widthwise direction, leaving a tether cloth seam allowance of 15 mm. A repeat of 3 stitches (or overlapping stitches) was formed at the beginning and end of sewing. The edges were mutually overlapped in the lengthwise direction of the main base fabric so that the strip formed a loop, and the overlapping part was sewed by 3 rows of linear sewing (7a) in the warp direction of the base fabric, with a stitch number of 35/10 cm. The loop length was 320 mm around the circumference. Separately, the edges of the tether cloth furthest from the specific sewing form were folded and the tether cloth was sewed together by 3 rows of linear sewing (7b) in the warp direction of the base fabric with a stitch number of 35/10 cm, at the middle part of the specific sewing form and the fold-over section. The length from the fold-over section to the imaginary line of the specific sewing form was 200 mm. Finally, it was confirmed that the overlapping parts of the main fabric and the tether cloth were not skewed, and that sewing on the imaginary line and sewing of the overlapping part were along the warp direction of the base fabric. If shifted there is a risk of imbalanced stress on the seam during measurement, potentially resulting in measurement error.

### (1) Measurement of seam strength per 1 cm imaginary line (N/cm)

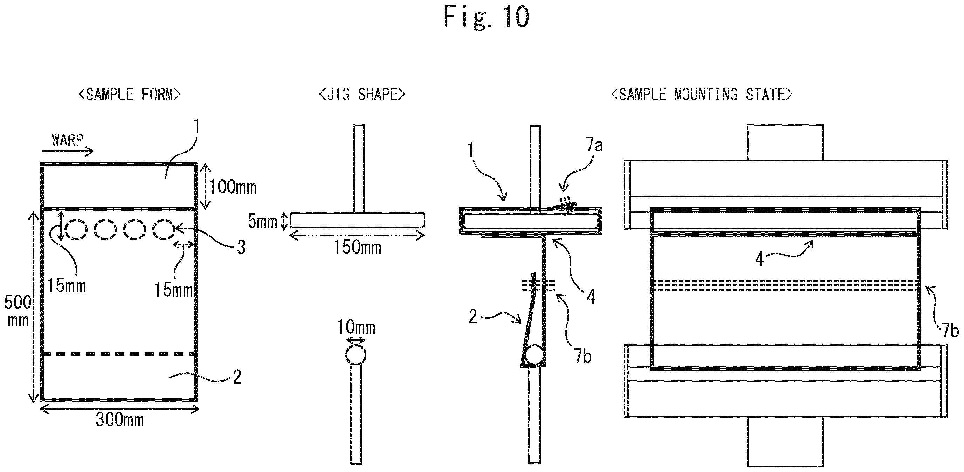

Ajig having the jig shape shown in Fig. 10, holding the test piece by a loop of the main base fabric and tether cloth, was mounted on a TENSILON universal material tester by A&D Co., Ltd. With the test piece mounted on the tester, as seen from the lateral direction (the direction allowing the thickness of the test piece to be observed), as indicated by "Sample mounting state" in Fig. 10, it was adjusted so that the tether cloth was perpendicular to the main base fabric (forming a T-shape). The stroke was adjusted during this time so that the tether cloth was pulled parallel to the direction of tension, the stroke (distance from the imaginary line to the anchoring point of the tether cloth) being 200 to 400 mm. Measurement was performed at a pull rate of 300 mm/min, dividing the maximum strength during tearing by the length of the imaginary line, to determine the seam strength per 1 cm of imaginary line length. Test pieces having a seam strength per 1 cm of imaginary line (N/cm) of less than 330 N/cm were evaluated as "P", those with 330 N/cm or greater and less than 440 N/cm were evaluated as "F", and those with 440 N/cm or greater were evaluated as "G".

### (2) Measurement of seam bending thickness (mm) (perpendicular to imaginary line)

A test piece fabricated as described above was folded perpendicular to the imaginary line and the crease of the test piece was fitted under a 3 cm × 6 cm plate, applying a load total of 1 Kg together with the plate for 30 seconds. The probe of a thickness gauge (FFA-10 by Ozaki Manufacturing Co., Ltd.) was then set with the center of the crease at the center line of the probe, and the value was measured after 1 minute. The position of the crease was set to have the minimum number of sewing lines running through the crease, and the average of measurement at 3 locations was recorded as the seam bending thickness value. Samples with a bending thickness of 3.5 mm or smaller were evaluated as "G", and those with a bending thickness larger than 3.5 mm were evaluated as "P".

### [Examples 2-1 to 2-3, 2-4, 2-4b, 2-5 to 2-7, Comparative Examples 2-1, 2-2]

Test pieces were fabricated having seams with the sewing forms shown in Table 2, and the seam strength per 1 cm of imaginary line (N/cm) and the seam bending thickness (mm) (perpendicular to the imaginary line) were measured. The results are shown in Table 2 below.

### [Table 2]

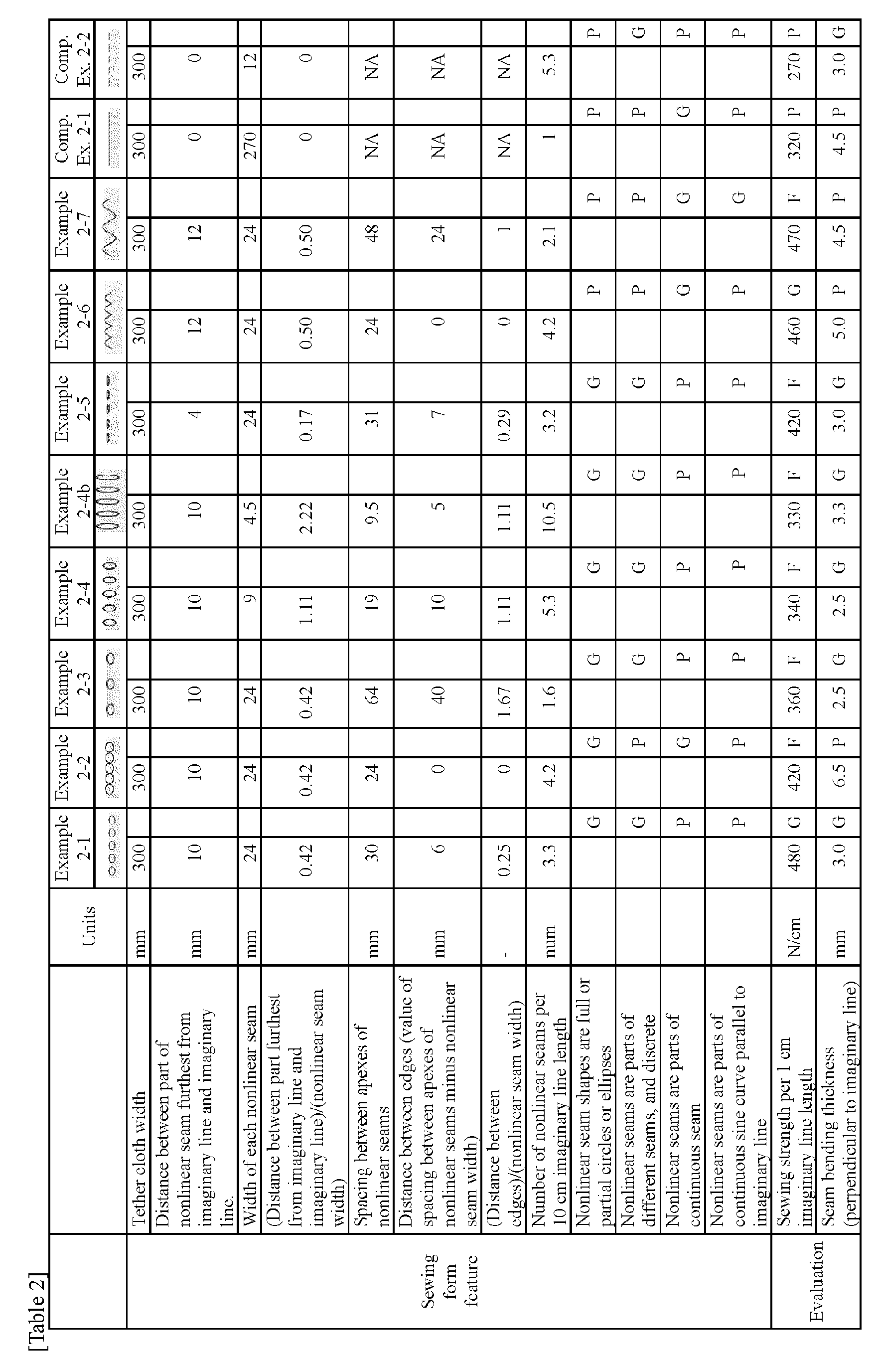

In comparing Examples 2-1 to 2-3, it is seen that the seam strength per 1 cm of imaginary line is reduced whether the spacings between circular seams are too narrow or too wide. The seam bending thickness was also impaired when the spacings were too narrow.

Based on Examples 2-4 and 2-4b it is seen that the seam strength per 1 cm of imaginary line is reduced when the (linear) widths of the nonlinear seams are less than 10 mm.

Based on Example 2-5 it is seen that the seam strength per 1 cm of imaginary line is reduced when the circular seams are too thin.

From Example 2-6 it is seen that if the nonlinear seams are continuous, the seam strength per 1 cm of imaginary line is not significantly reduced but the seam bending thickness (mm) is impaired.

From Example 2-7 it is seen that if the nonlinear seams are sine curves, the seam strength per 1 cm of imaginary line is not reduced but the seam bending thickness (mm) is impaired.

From Comparative Example 2-1 it is seen that due to the lack of spacings and nonlinear sections, the seam strength per 1 cm of imaginary line was further reduced and the seam bending thickness (mm) was further impaired.

From Comparative Example 2-2 it is seen that since spacings were present and nonlinear sections (partial curves) were absent, the total amount of seams was reduced and the seam strength per 1 cm of imaginary line was further reduced.

### INDUSTRIAL APPLICABILITY

The invention provides an airbag which has reduced tearing at the seams due to a specific sewing form for the seams, the airbag being made by sewing a wide tether cloth between opposing base fabric panels so that a predetermined thickness is maintained when it is inflated, as well as a method for producing it. This specific sewing form ensures that the total amount of the lengths of the seams at the parts subjected to stress is as required for a wide tether (that is, it avoids simple reduction in the amount of sewing due to excessive spacing between the seams, which results in lower strength). In addition, since this specific sewing form has the straight linear seams discrete and has nonlinear sections which directed toward the seam allowance end (the depth direction) of the tether cloth, at the edge of each seam, the amount of stitching is greater compared to simple straight linear seams, while applied stress is diffused in the depth direction, thereby further increasing the strength. Moreover, since this specific sewing form has numerous discrete straight linear seams with numerous seam edges as well, this increases the number of locations where stress tends to concentrate, compared to a simple single straight linear seam with only two edges, resulting in reduced stress per edge and preventing tearing from the edges.

The airbag of the invention can therefore be suitably used as an automobile airbag, and especially as a pedestrian airbag.

The invention provides an airbag which has reduced tearing at the seams due to a specific sewing form for the seams, the airbag being made by sewing a wide tether cloth between opposing base fabric panels so that a predetermined thickness is maintained when it is inflated, as well as a method for producing it. This specific sewing form ensures that the total amount of the lengths of the seams at the parts subjected to stress is as required for a wide tether (that is, it avoids simple reduction in the amount of sewing due to excessive spacing between the seams, which results in lower strength). Moreover, in this specific sewing form, the multiple nonlinear seams protruding to the opposite side from the seam allowance end (the depth direction) of the tether cloth (the side subjected to stress) are preferably discrete, and since nonlinear sections (partial curves) are present which are directed toward the seam allowance end (the depth direction) of the tether cloth, the amount of stitching is greater compared to simple straight linear seams, while applied stress is diffused in the depth direction, forming wrinkles in the panel base fabric, and thereby further increasing the strength. Moreover, since this specific sewing form has numerous nonlinear sections (partial curves) as well when the multiple nonlinear seams are discrete, this increases the number of locations where stress tends to concentrate, compared to a simple single straight linear seam with only two edges, and yet results in reduced stress per edge, to prevent tearing from the edges.

The airbag of the invention can therefore be suitably used as an automobile airbag, and especially as a pedestrian airbag.

### REFERENCE SIGNS LIST

### (Figs. 1 to 5)

1 Panel base fabric
2 Tether cloth
3 Specific sewing form
4 Imaginary line
5 Seam allowance end of tether cloth
6 Seam allowance end of tether cloth
7a 3 rows of linear sewing
7b 3 Rows of linear sewing
(Note) Reference numerals are those in the diagrams other than Fig. 1(A) and Fig. 1(B).

### (Figs. 6 to 10)

1 Panel base fabric
2 Tether cloth
3 Specific sewing form
3a Nonlinear seam (part protruding to side opposite from seam allowance end of tether cloth) 3b Seam section continuous with nonlinear seam
4 Imaginary line
5 Seam allowance end of tether cloth
6 Seam allowance end of tether cloth
7 Width of each nonlinear seam
8 Spacing between apexes of nonlinear seams
9 Distance between part of nonlinear seam furthest from imaginary line and imaginary line.
(Note) Reference numerals are those in the diagrams other than Fig. 6(A) and Fig. 6(B).

### ITEMS

### [Item 1]

An airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
wherein the stitching between the base fabric panels and the tether cloth includes multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.

### [Item 2]

The airbag according to item 1, wherein the prescribed width of the tether cloth is 50 mm to 500 mm.

### [Item 3]

The airbag according to item 1 or 2, wherein the straight linear seam length is 5 mm to 100 mm.

### [Item 4]

The airbag according to item 1 or 2, wherein the spacings between the straight linear seams arranged along the imaginary line are 5 mm to 50 mm.

### [Item 5]

The airbag according to item 1 or 2, wherein the ratio: (straight linear seam spacing/straight linear seam length), as the ratio of the straight linear seam spacing with respect to the straight linear seam length, is 0.2 to 1.5.

### [Item 6]

The airbag according to item 1 or 2, wherein the bending angle at the edges of the straight linear seams is 60° to 120°.

### [Item 7]

The airbag according to any one of items 1 to 6, wherein the lengths of the nonlinear sections at the edges of the straight linear seams is 3 mm to 50 mm.

### [Item 8]

The airbag according to item 1 or 2, wherein the number of multiple straight linear seams arranged discretely along the imaginary line is 2 to 20 per 10 cm length of the imaginary line.

### [Item 9]

The airbag according to item 1 or 2, wherein the straight linear seams are polygonal or half-circular, or portions thereof, having one side shared with the imaginary line.

### [Item 10]

The airbag according to item 1 or 2, wherein each straight linear seam is part of a different seam.

### [Item 11]

The airbag according to item 1 or 2, wherein the straight linear seams are partial continuous square waves on the imaginary line.

### [Item 12]

The airbag according to item 1 or 2, wherein the airbag is a pedestrian airbag.

### [Item 13]

A method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
a step of stitching the base fabric panels and tether cloth in a manner to include multiple straight linear seams arranged discretely along an imaginary line extending in the widthwise direction of the tether cloth, with the edges of the straight linear seams having nonlinear sections that are nonlinear with predetermined angles and predetermined lengths from the imaginary line toward the seam allowance edge on the tether cloth.

### [Item 14]

The method for producing an airbag according to item 13, which comprises a step of continuously sewing so that the straight linear seams are part of a continuous seam.

### [Item 15]

An airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
wherein the stitching between the base fabric panels and the tether cloth includes multiple nonlinear seams protruding toward the side opposite from the seam allowance end of the tether cloth, the apexes of the protrusions of the multiple nonlinear seams being on an imaginary line extending in the widthwise direction of the tether cloth.

### [Item 16]

The airbag according to item 15, wherein the prescribed width of the tether cloth is 50 mm to 500 mm.

### [Item 17]

The airbag according to item 15 or 16, wherein the distance between the part of each multiple nonlinear seam aligned along the imaginary line which is furthest from the imaginary line, and the imaginary line, is 1 mm to 100 mm.

### [Item 18]

The airbag according to item 15 or 16, wherein the width of each nonlinear seam is 5 mm to 100 mm, where the widths of the nonlinear seams are the lengths of the multiple nonlinear seams aligned along the imaginary line, in the direction parallel to the imaginary line.

### [Item 19]

The airbag according to item 15 or 16, wherein the value calculated as (distance between the part furthest from the imaginary line and the imaginary line)/(width of the nonlinear seam) is 0.1 to 2.0.

### [Item 20]

The airbag according to item 15 or 16 above, wherein the spacing between the apexes of the protrusions of the seams of adjacent curves is 5 mm to 100 mm.

### [Item 21]

The airbag according to item 15 or 16 above, wherein the value of the spacing between the apexes of the protrusions of the seams of adjacent curves minus the widths of the nonlinear seams is 0 mm to 50 mm.

### [Item 22]

The airbag according to item 15 or 16, wherein the value calculated as (spacing between apexes of the protrusions of the nonlinear seams - width of the nonlinear seam)/(width of the nonlinear seam) is 0 to 1.5.

### [Item 23]

The airbag according to item 15 or 16, wherein the number of nonlinear seams aligned along the imaginary line is 2 to 20 per 10 cm length of the imaginary line.

### [Item 24]

The airbag according to item 15 or 16 above, wherein the nonlinear seam shapes are partial circular or elliptical.

### [Item 25]

The airbag according to item 15 or 16, wherein the multiple nonlinear seams aligned along the imaginary line form parts of different seams, and are discrete.

### [Item 26]

The airbag according to item 15 or 16, wherein each nonlinear seam is part of a continuous seam.

### [Item 27]

The airbag according to item 15 or 16, wherein the nonlinear seams are partial continuous sine curves parallel to the imaginary line.

### [Item 28]

The airbag according to item 15 or 16, wherein the airbag is a pedestrian airbag.

### [Item 29]

A method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
a step of stitching between the base fabric panels and the tether cloth which includes multiple nonlinear seams protruding toward the side opposite from the seam allowance end of the tether cloth, wherein the apexes of the multiple nonlinear seams are on an imaginary line extending in the widthwise direction of the tether cloth.

### [Item 30]

The method for producing an airbag according to item 29, which comprises a step of continuously sewing so that each nonlinear seam is all or part of a continuous seam.

## Claims

1. An airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag,
wherein the stitching between the base fabric panels and the tether cloth includes multiple nonlinear seams protruding toward the side opposite from the seam allowance end of the tether cloth, the apexes of the protrusions of the multiple nonlinear seams being on an imaginary line extending in the widthwise direction of the tether cloth.

2. The airbag according to claim 1, wherein the prescribed width of the tether cloth is 50 mm to 500 mm.

3. The airbag according to claim 1 or 2, wherein the distance between the part of each multiple nonlinear seam aligned along the imaginary line which is furthest from the imaginary line, and the imaginary line, is 1 mm to 100 mm.

4. The airbag according to claim 1 or 2, wherein the width of each nonlinear seam is 5 mm to 100 mm, where the widths of the nonlinear seams are the lengths of the multiple nonlinear seams aligned along the imaginary line, in the direction parallel to the imaginary line.

5. The airbag according to claim 1 or 2, wherein the value calculated as (distance between the part furthest from the imaginary line and the imaginary line)/(width of the nonlinear seam) is 0.1 to 2.0.

6. The airbag according to claim 1 or 2 above, wherein the spacing between the apexes of the protrusions of the seams of adjacent curves is 5 mm to 100 mm.

7. The airbag according to claim 1 or 2 above, wherein the value of the spacing between the apexes of the protrusions of the seams of adjacent curves minus the widths of the nonlinear seams is 0 mm to 50 mm.

8. The airbag according to claim 1 or 2, wherein the value calculated as (spacing between apexes of the protrusions of the nonlinear seams - width of the nonlinear seam)/(width of the nonlinear seam) is 0 to 1.5.

9. The airbag according to claim 1 or 2, wherein the number of nonlinear seams aligned along the imaginary line is 2 to 20 per 10 cm length of the imaginary line.

10. The airbag according to claim 1 or 2 above, wherein the nonlinear seam shapes are partial circular or elliptical.

11. The airbag according to claim 1 or 2, wherein the multiple nonlinear seams aligned along the imaginary line form parts of different seams, and are discrete.

12. The airbag according to claim 1 or 2, wherein each nonlinear seam is part of a continuous seam.

13. The airbag according to claim 1 or 2, wherein the nonlinear seams are partial continuous sine curves parallel to the imaginary line.

14. The airbag according to claim 1 or 2, wherein the airbag is a pedestrian airbag.

15. A method for producing an airbag having a bag comprising a pair of base fabric panels sewn together at the outer perimeter edges, and a tether cloth of prescribed width stitched to each of the pair of base fabric panels on the inner side of the bag so as to restrict the distance between the pair of base fabric panels during inflation of the bag, the method comprising the following step:
a step of stitching between the base fabric panels and the tether cloth which includes multiple nonlinear seams protruding toward the side opposite from the seam allowance end of the tether cloth, wherein the apexes of the multiple nonlinear seams are on an imaginary line extending in the widthwise direction of the tether cloth.

16. The method for producing an airbag according to claim 15, which comprises a step of continuously sewing so that each nonlinear seam is all or part of a continuous seam.
